# DEMANDE DE BREVET EUROPEEN

(11) **EP 4 282 276 A2**
(43) Date de publication de la demande: **29.11.2023**
(21) Numéro de dépôt: 23194879.5
(22) Date de dépôt: 12.11.2021
(51) Int. Cl.: A23K 50/10

(54) **MÉTHODE ET COMPOSITION ALIMENTAIRE POUR RÉDUIRE LA PRODUCTION DE MÉTHANE CHEZ LES RUMINANTS**

(30) Priorité: 13.11.2020 FR 2011670
(62) Demande divisionnaire de: 21207886.9
(71) Demandeur: Tereos France, 77230 Moussy le Vieux (FR)
(72) Inventeur: BERGOUG, Hakim, 77230 Moussy-le-Vieux (FR)
(74) Mandataire: Icosa

(57) **Abrégé**

La présente invention concerne une méthode pour réduire la production de méthane par des ruminants laitiers, comprenant leur alimentation avec une composition alimentaire ensilée. Elle concerne également une composition alimentaire ensilée.

## Description

### DOMAINE DE L'INVENTION

La présente invention se situe dans le domaine de l'alimentation animale et, plus précisément, le domaine de l'alimentation des animaux destinés à la production de lait. Plus précisément, l'invention concerne une ration alimentaire et son utilisation dans une méthode alimentaire des ruminants laitiers permettant la réduction de la méthanogenèse, sans impacter la production de lait.

### ÉTAT DE LA TECHNIQUE

Chez le ruminant, la méthanogenèse est un phénomène naturel qui a lieu lors de la digestion microbienne des aliments dans le rumen.

La digestion des aliments et des rations dans le rumen des vaches laitières est un phénomène complexe, et intimement lié à la population microbienne du rumen, qui dégrade la très grande majorité des constituants chimiques de la ration. C'est notamment le cas de la fraction digestible des fibres alimentaires, digérées à plus de 90% dans le rumen par les bactéries cellulolytiques. Cette dégradation conduit à la production d'acides gras volatils (AGV), première source d'énergie pour la vache, qui sont absorbés par la paroi du rumen, mais aussi à la production de « déchets », comme le méthane, qui sera éructé. Concernant les protéines, une grande partie est dégradée en ammoniac et en acides aminés par la flore du rumen, servant ensuite à la synthèse des protéines microbiennes, l'ammoniac en excès étant transformé en urée rejetée principalement dans les urines et le lait.

Cependant, le méthane est, avec le dioxyde de carbone, le protoxyde et des carbures halogénés, l'un des principaux gaz à effet de serre (GES). Dans le cadre d'action en matière de climat et d'énergie à l'horizon 2030, l'Union Européenne prévoit une réduction les émissions de gaz à effet de serre d'au moins 40 % par rapport à 1990. A titre indicatif, en France, l'agriculture est le secteur économique qui produit la majorité du méthane émis. Sa production représente environ 70 % des émissions totales hors puits (CITEPA 2019). La quasi-totalité est issue de l'élevage si l'on cumule le méthane des ruminants et celui issu du stockage des déjections animales.

Il apparaît donc nécessaire de réduire les émissions de méthane par l'élevage des ruminants. Différentes solutions ont été proposées pour atteindre cet objectif telles que la sélection de races de ruminants peu propices à la méthanogenèse, la substitution partielle des fourrages par des concentrés alimentaires, l'ajout d'enzymes et de probiotiques dans l'alimentation animale, l'intensification de la production en vue de réduire la méthanogenèse par litre de lait produit, voire l'ajout d'antibiotiques, dits ionophores, visant les bactéries ruminales (Beauchemin et al. Australian Journal of Experimental Agriculture 2008, 48, 21-27, Martin et al. Animal 2010, 4(3), 351-365). Néanmoins, ces solutions présupposent la modification conséquente des moyens habituellement utilisés dans l'élevage. En outre, il n'y a pas de consensus scientifique sur l'efficacité de telles solutions à réduire la méthanogenèse ruminale.

Par conséquent, une méthode simple et efficace pour réduire l'émission de méthane par les ruminants reste un besoin réel.

La présente invention vise à combler cette lacune. De manière surprenante, les inventeurs ont constaté que la mise en oeuvre d'un mélange d'ingrédients alimentaires des ruminants, notamment des ruminants laitiers, qui est par la suite ensilé, permet la réduction significative de la production de méthane par les ruminants, notamment les ruminants laitiers.

Avantageusement, la présente méthode peut être mise en oeuvre avec des techniques couramment utilisés dans les fermes d'élevage tout en valorisant des produits secondaires de la production agricole à faible coût.

De manière encore plus avantageuse, la présente méthode permet la réduction significative de la production de méthane par des ruminants laitiers sans que leur rendement laitier soit impacté.

### RÉSUMÉ

Ainsi, la présente invention concerne tout d' abord une méthode pour réduire la production de méthane sans modifier la production laitière par des ruminants laitiers, ladite méthode comprenant les étapes de :
a) préparation d'un mélange, ledit mélange comprenant :
   - des pulpes de betteraves ;
   - du gluten feed de blé ;
   - de l'ensilage de maïs ;
   - des drêches ; et
   - de l'enrubannage d'herbe, puis
b) ensilage du mélange obtenu à l'étape a) pour obtenir une composition alimentaire ensilée, puis
c) ajout éventuel de compléments à la composition alimentaire ensilée obtenue à l'étape b) pour obtenir une composition alimentaire finale ; puis
d) alimentation des ruminants laitiers avec la composition alimentaire finale obtenue à l'étape c).

Selon un mode de réalisation, le mélange comprend :
- entre 10% et 20% de pulpes de betteraves ;
- entre 5 % et 15% de gluten feed de blé ;
- entre 25 % et 40 % d'ensilage de maïs ;
- entre 5% et 15% de drêches ; et
- entre 10 et 15% d'enrubannage d'herbe ;
les pourcentages étant exprimés en poids par rapport au poids total de la matière sèche du mélange.

Selon un mode de réalisation, le mélange comprend en outre un complément azoté, de préférence de 1 à 5 % en poids par rapport au poids total de la matière sèche du mélange.

Selon un mode de réalisation, le mélange comprend :
- entre 15% et 20% de pulpes de betteraves ;
- entre 10 % et 15% de gluten feed de blé ;
- entre 35% et 40 % d'ensilage de maïs ;
- entre 10% et 15% de drêches ;
- entre 10% et 15% d'enrubannage d'herbe ; et
- entre 1% et 3% de complément azoté ;
les pourcentages étant exprimés en poids par rapport au poids total de la matière sèche du mélange.

Selon un mode de réalisation, le complément azoté est un aliment composé liquide.

Selon un mode de réalisation, la méthode comprend une étape c) d'ajout à la composition alimentaire ensilée de paille hachée et/ou d'un complément nutritionnel, ledit complément nutritionnel comprenant de préférence du carbonate de calcium, du phosphate monocalcique, du phosphate de magnésium, de la mélasse de canne, de l'oxyde de magnésium, des vitamines et des oligo-éléments choisis parmi le cuivre, le manganèse, le zinc, l'iode, le cobalt et le sélénium.

Selon un mode de réalisation, la composition alimentaire finale comprend :
- entre 90% et 95% de composition alimentaire ensilée ;
- entre 4 % et 9% de paille hachée ; et
- entre 1% et 3% de complément nutritionnel,
les pourcentages étant exprimés en poids par rapport au poids total de la matière sèche de la composition alimentaire finale.

Selon un mode de réalisation, l'ensilage du mélange est mis en oeuvre pendant une durée d'au moins trois semaines.

Selon un mode de réalisation, l'alimentation de l'étape d) est une alimentation à volonté des ruminants.

La présente invention concerne également une composition alimentaire pour ruminants comprenant une composition alimentaire ensilée obtenue par ensilage d'un mélange, dit mélange à ensiler, comprenant :
- des pulpes de betteraves ;
- du gluten feed de blé ;
- de l'ensilage de maïs ;
- des drêches ; et
- de l'enrubannage d'herbe,
et au moins un complément comprenant de la paille hachée et/ou un complément nutritionnel.

### DÉFINITIONS

Dans la présente invention, les termes ci-dessous sont définis de la manière suivante : **"Acide gras"** désigne un acide carboxylique à chaîne aliphatique carbonée saturée ou insaturée possédant de 4 à 36 atomes de carbone. De préférence, les acides gras de pulpe de betterave comprennent ou sont constitués d'au moins un des acides gras suivants : acide palmitique, acide stéarique, acide oléique, acide linoléique et acide linolénique.

**"Amidon"** désigne un polysaccharide composé de chaînes de molécules de D-glucose, les unités de glucose étant liées pour environ 95% par des liaisons alpha-1,4 et pour environ 5% par des liaisons alpha-1,6. Les deux homopolymères constitutifs de l'amidon sont l'amylose (qui résulte de l'enchaînement linéaire d'unités glucose liées par des liaisons alpha-1,4) et l'amylopectine (qui présente une structure ramifiée dans laquelle des fragments linéaires de type amylose sont liés par des liaisons alpha-1,6) ; du fait de la présence de l'amylopectine, l'amidon est partiellement ramifié.

**"Betterave"** ou **"betterave à sucre"** ou **"betterave sucrière"** désigne la plante de nom latin *Beta vulgaris.* Selon un mode de réalisation, le terme "betterave" ou "betterave à sucre" ou "betterave sucrière" concerne la racine de la plante *Beta vulgaris.*

**"Cellulose"** concerne un glucide constitué d'une chaîne linéaire de D-glucose (entre 15 et 15 000 unités de D-glucose).

**"Complément azoté"** désigne dans la présente invention un complément pour l'alimentation animale comprenant au moins une matière azotée soluble. Il peut s'agir notamment d'un activateur d'appétence. **"Activateur d'appétence"** désigne un composé ou mélange de composés riche en sucre, en matières azotées solubles et/ou en oligo-éléments rapidement utilisables par les microorganismes de la panse. De préférence, l'activateur d'appétence apporte au ruminant laitier de l'énergie et de l'azote soluble indispensables au fonctionnement du rumen. Dans un mode de réalisation, le complément azoté est un aliment composé liquide, notamment ceux de la gamme Damiliq^{®} commercialisés par la société EAS, en particulier il s'agit de l'aliment composé liquide Damiliq Energie ou Damiliq^{®} 42.

**"Complément nutritionnel"** désigne dans la présente invention un complément pour l'alimentation animale comprenant au moins un élément minéral essentiel aux animaux d'élevage. Ledit élément minéral peut être notamment choisi parmi le phosphore, le magnésium et le calcium. Le complément nutritionnel peut également comprendre des vitamines et/ou des oligo-éléments tels que le cuivre, le manganèse, le zinc, l'iode, le cobalt et/ou le sélénium. En particulier, le complément nutritionnel peut comprendre du carbonate de calcium, du phosphate monocalcique, du phosphate de magnésium, de la mélasse de canne, de l'oxyde de magnésium, des vitamines et des oligo-éléments choisis parmi le cuivre, le manganèse, le zinc, l'iode, le cobalt et le sélénium. Le complément nutritionnel peut se présenter sous la forme de granulés, de bloc ou seau à lécher, ou de semoule notamment. Il peut s'agir notamment d'un aliment minéral de type « Kéomine ».

**"Comprendre"** et ses déclinaisons ont dans la présente demande un caractère non limitatif. En d'autres termes, lorsqu'une composition comprend des composés, cela n'exclut pas la présence d'autres composés que ceux mentionnés dans la composition. Dans certains modes de réalisation particuliers, « comprendre » et ses déclinaisons peuvent être interprétés comme signifiant « être constitué essentiellement de », voire « être constitué de ».

**"Compris entre X et Y**" désigne la gamme de valeurs comprises entre X et Y, les bornes X et Y étant incluses dans ladite gamme, sauf précision contraire.

**"Drêches"** désigne une composition alimentaire obtenue des résidus de céréales maltées ou non maltées, de préférence de blé. Selon un mode de réalisation, les drêches sont obtenues après la fermentation de blé pour la production de bio-éthanol. Il peut s'agir par exemple de drêches issues de brasseries, d'éthanoleries et/ou de distilleries. Les drêches peuvent être fraîches, ensilées ou sèches. Dans un mode de réalisation, la composition de drêches contient plus de 90 % de matière sèche en poids. Dans un mode de réalisation, la composition de drêches contient au moins 95 % de matière sèche en poids. Selon un mode de réalisation, la composition de drêches comprend :
- entre 30 % et 37% de protéines brutes,
- entre 3% et 8% de matières grasses,
- entre 14% et 20% d'amidon,
- entre 4% et 7% de sucres,
- entre 5% et 8% de cellulose,
- entre 1% et 3% de lignine, et
entre 3 et 8% de matières minérales, les pourcentages étant exprimés en poids par rapport à la matière sèche (MS) de la composition de drêches.

**"Ensilage"** désigne une technique de conservation par voie humide, faisant appel à l'anaérobiose et à une fermentation acidifiante à dominante lactique afin de minimiser les pertes de matière sèche, de valeur alimentaire et d'éviter le développement de micro- organismes indésirables. Dans un mode de réalisation, l'ensilage a une durée d'au moins 2 semaines, de préférence au moins 3 semaines. Dans un mode de réalisation, les ingrédients ensilés ont une température comprise entre 15°C et 50°C, de préférence entre 20°C et 40°C. Dans un mode de réalisation, le taux d'humidité du mélange d'ingrédients ensilé est compris entre 40 et 80%, de préférence entre 55 et 65% en poids par rapport au poids total du mélange ensilé.

**"Ensilage de maïs"** désigne un ingrédient alimentaire fait de plantes entières de maïs (*Zea mays*) ensilées. Selon un mode de réalisation, l'ensilage de maïs contient moins de 25% de matière sèche, entre 25 et 30% de matière sèche, entre 30 et 35% de matière sèche ou entre 35 et 40% de matière sèche, les pourcentages étant exprimés en poids par rapport au poids total de l'ensilage de maïs. Dans un mode de réalisation, l'ensilage de maïs contient entre 30 et 35%, typiquement environ 30,0 % de matière sèche. Selon ce mode de réalisation, l'ensilage de maïs comprend :
- entre 6 % et 8 % de protéines brutes,
- entre 2% et 3% de matières grasses,
- entre 20% et 30% d'amidon,
- entre 0,1% et 0,2% de sucres,
- entre 2% et 4% de lignine, et
- entre 3 et 5% de matières minérales, les pourcentages étant exprimés en poids par rapport à la matière sèche (MS) de l'ensilage de maïs.

" **Enrubannage d'herbe** " désigne de l'herbe qui a été conservée par « emballage » par des films plastiques, notamment par 4 à 6 couches de film plastique. Ce procédé de conservation permet notamment de priver le fourrage d'oxygène, ce qui permet aux sucres d'être fermentés par les bactéries présentes. Avantageusement, l'herbe a été enrubannée de façon précoce, juste avant l'épiaison (quand l'épi sort de la gaine), afin de conserver une matière plus riche en protéines. L'enrubannage d'herbe peut se présenter sous forme de balles.

**"Environ"** ou **"approximativement",** placé devant un chiffre ou un nombre, signifie plus ou moins 10% de la valeur nominale de ce chiffre ou ce nombre, de préférence plus ou moins 5% de ladite valeur nominale, en particulier plus ou moins 1% de ladite valeur nominale.

**"Glucide simple"** ou **"saccharides"** ou **"sucres",** désigne les monosaccharides (aussi appelés oses) et disaccharides.

**"Gluten feed de blé"** désigne un sous-produit obtenu lors de la fabrication d'amidon et de gluten de blé. Il est constitué de son, dont on a partiellement enlevé ou non le germe, et de gluten, auxquels de très faibles quantités de brisures de blé résultant du criblage des grains et de très faibles quantités de résidus de l'hydrolyse de l'amidon peuvent être ajoutés (règlement UE N° 242/2010). Selon un mode de réalisation, le gluten feed de blé contient entre 80% et 95% en poids de matière sèche. Selon un mode de réalisation, le gluten feed de blé contient environ 92 % en poids de matière sèche.

Selon un mode de réalisation, le gluten feed de blé comprend :
- entre 15% et 25% de protéines brutes,
- entre 3% et 8% de matières grasses,
- entre 12% et 17% d'amidon,
- entre 2% et 5% de sucres,
- entre 8% et 12% de cellulose, et
- entre 5 et 10% de matières minérales, les pourcentages étant exprimés en poids par rapport au poids total du gluten feed de blé.

Selon un mode de réalisation, le gluten feed de blé comprend environ 18,0% de protéines brutes, environ 5,0% de matières grasses, environ 14,0% d'amidon, environ 3% de sucres, environ 9,0% de cellulose et environ 7,0 % de matières minérales, les pourcentages étant exprimés en poids par rapport au poids total du gluten feed de blé. Dans un mode de réalisation particulier, le gluten feed de blé est un produit de la série Amyplus^{®} de Tereos.

**"Matière sèche"** ou **"MS"** désigne ce que l'on obtient lorsqu'on soustrait l'eau d'un produit.

**"Mélasse"** désigne un résidu résultant du raffinage du sucre, et qui peut être utilisé comme liant dans des compositions alimentaires animales. Il peut s'agir notamment de mélasse de canne ou de betterave.

**"Protéine"** désigne une entité fonctionnelle formée d'un ou plusieurs peptides ou polypeptides et éventuellement des co-facteurs non-peptidiques. **"Peptide"** désigne un polymère linéaire de moins de 50 acides aminés dans lequel les acides aminés sont liés ensemble par des liaisons peptidiques. **"Polypeptide"** désigne un polymère linéaire d'au moins 50 acides aminés dans lequel les acides aminés sont liés ensemble par des liaisons peptidiques.

**"Protéine brute"** désigne une mesure de la teneur en protéines. Dans les aliments pour animaux, les protéines brutes sont calculées en azote minéral x 6,25 (basée sur l'hypothèse que les protéines des aliments typiques pour animaux contiennent en moyenne 16% d'azote). La valeur de l'azote minéral est obtenue par la méthode Kjeldahl, ou par une méthode donnant des résultats similaires après correction, telle que la méthode Dumas.

**"Pulpe de betterave"** concerne le résidu d'extraction du sucre de la betterave ; elle est typiquement constituée de 21% en poids de pectines ; 28% en poids d'hémicellulose ; 26% en poids de cellulose ; 6% en poids de lignine ; 1% en poids d'acides gras ; 8% en poids de protéines ; et 10% en poids de composés C, les pourcentages en poids étant exprimés par rapport au poids de la matière sèche de pulpe de betterave.

Selon un mode de réalisation, les composés C comprennent ou sont constitués d'un mélange d'au moins un sucre et de composés minéraux. De préférence, l'au moins un sucre est choisi parmi : arabinose, galactose, saccharose, glucose, xylose et mannose. De préférence, les composés minéraux comprennent ou consistent en au moins un composé choisi parmi : calcium, phosphore, magnésium, potassium, sodium, chlore, soufre, manganèse, zinc, cuivre, fer, sélénium, cobalt, molybdène et iode.

Selon un mode de réalisation, les composés C comprennent en outre au moins un acide phénolique tel que l'acide férulique et l'acide coumarique. Selon un mode de réalisation, les autres composés C comprennent en outre des vitamines telles que de la vitamine A, vitamine D, vitamine E, vitamine B1, vitamine B2, vitamine B5, vitamine B6, vitamine B 12, et/ou vitamine PP. Selon un mode de réalisation, les composés C comprennent en outre de la choline.

Selon un mode de réalisation, les composés C comprennent ou consistent en un mélange d'au moins un sucre, de composés minéraux, de vitamines, d'acides phénoliques et de choline, de préférence tels que définis dans la présente demande.

La pulpe de betterave peut être de la pulpe de betterave surpressée.

**"Ruminants** " désigne dans la présente invention des mammifères herbivores polygastriques dont la digestion prégastrique a totalement ou partiellement lieu en remastiquant les aliments après leur ingestion. Il s'agit de préférence de ruminants laitiers, notamment de ruminants laitiers d'élevage, destinés à la production laitière. Dans un mode de réalisation, il s'agit de ruminants sevrés. Dans un mode de réalisation, les ruminants selon l'invention sont choisis parmi des bovins, des ovins et des caprins. De préférence, les ruminants sont des vaches, notamment des vaches laitières.

### DESCRIPTION DÉTAILLÉE

### Composition alimentaire ensilée

La présente invention concerne une composition alimentaire, dite composition alimentaire ensilée, pour ruminants, notamment pour ruminants laitiers, ladite composition alimentaire ensilée étant obtenue par ensilage d'un mélange comprenant des pulpes de betteraves et de l'ensilage de maïs.

Dans un mode de réalisation, la composition alimentaire ensilée est obtenue par ensilage d'un mélange, dit mélange à ensiler, comprenant :
- des pulpes de betteraves ;
- du gluten feed de blé ;
- de l'ensilage de maïs ;
- des drêches; et
- de l'enrubannage d'herbe.

La composition alimentaire ensilée selon l'invention permet, lorsqu'elle est utilisée dans l'alimentation de ruminants laitiers, de réduire la production de méthane par lesdits ruminants laitiers, sans altérer leur production laitière.

De préférence, l'utilisation de la composition alimentaire ensilée selon l'invention dans l'alimentation de ruminants permet de réduire la production de méthane d'au moins 5%, de préférence au moins 8%, par rapport aux ruminants alimentés avec la même composition alimentaire finale dont le mélange n'a pas été ensilé.

Sans vouloir être liés par une quelconque théorie, il semble que l'ensilage du mélange permette de réduire la teneur de la composition alimentaire en matière organique fermentescible, notamment en amidon et/ou protéines digestibles dans l'intestin d'origine alimentaire, qui représente le « carburant » de la flore ruminale à l'origine de l'émission de méthane.

Dans certains modes de réalisation, la composition alimentaire selon l'invention permet, lorsqu'elle est utilisée dans l'alimentation de ruminants laitiers, d'augmenter la production laitière et/ou l'efficacité alimentaire (quantité de lait réduite rapportée à la quantité d'aliment ingérée).

Enfin, la composition alimentaire selon l'invention permet, lorsqu'elle est utilisée dans l'alimentation de ruminants, de réduire le temps de travail de l'éleveur, de maintenir une stabilité de la composition alimentaire dans le temps en limitant les erreurs lors de la préparation quotidienne et le tri réalisé par les animaux, et d'améliorer sa conservation grâce à la minimisation de la surface du front d'attaque, notamment en été.

Les quantités de chacun des constituants dans le mélange à ensiler peuvent être aisément adaptées par l'homme du métier en fonction notamment du type de ruminants auxquels la composition alimentaire ensilée est destinée, et des propriétés physico-chimiques et/ou nutritionnelles souhaitées pour la composition alimentaire ensilée.

Dans un mode de réalisation, les pulpes de betteraves sont présentes dans le mélange à ensiler en une quantité comprise entre 1 et 50%, de préférence entre 5 et 30%, en particulier entre 10 et 20%, les pourcentages étant exprimés en poids par rapport au poids total de la matière sèche du mélange. Dans un mode de réalisation particulier, la quantité de pulpes de betteraves dans le mélange à ensiler est comprise entre 14 et 15%, en particulier elle est d'environ 14,6%.

Dans un mode de réalisation, le gluten feed de blé est présent dans le mélange à ensiler en une quantité comprise entre 1 et 25%, de préférence entre 5 et 15%, les pourcentages étant exprimés en poids par rapport au poids total de la matière sèche du mélange. Dans un mode de réalisation particulier, la quantité de gluten feed de blé est comprise entre 9 et 10%, en particulier elle est d'environ 9,9%.

Dans un mode de réalisation, l'ensilage de maïs est présent dans le mélange à ensiler en une quantité comprise entre 10 et 70%, de préférence entre 20 et 60%, en particulier entre 30 et 50%, les pourcentages étant exprimés en poids par rapport au poids total de la matière sèche du mélange. Dans un mode de réalisation particulier, la quantité d'ensilage de maïs est comprise entre 42 et 43%, en particulier elle est d'environ 42,8%.

Dans un mode de réalisation, les drêches sont présentes dans le mélange à ensiler en une quantité comprise entre 2 et 30%, de préférence entre 5 et 15%, les pourcentages étant exprimés en poids par rapport au poids total de la matière sèche du mélange. Dans un mode de réalisation particulier, la quantité de drêches est comprise entre 10 et 11%, en particulier elle est d'environ 10,2%.

Dans un mode de réalisation, l'enrubannage d'herbe est présent dans le mélange à ensiler en une quantité comprise entre 2 et 50%, de préférence entre 5 et 20%, en particulier entre 10 et 15%, les pourcentages étant exprimés en poids par rapport au poids total de la matière sèche du mélange. Dans un mode de réalisation particulier, la quantité d'enrubannage d'herbe est comprise entre 11 et 12%, en particulier elle est d'environ 11,3%.

Le mélange à ensiler peut comprendre en outre tout autre élément adapté à l'alimentation des ruminants. Ainsi, le mélange à ensiler peut comprendre en outre des éléments choisis dans le groupe constitué par les tourteaux de soja et/ou de colza, les compléments azotés, les liants tels que les mélasses, la luzerne et tout mélange d'au moins deux de ces composants.

Les tourteaux de soja et/ou de colza peuvent être présents en une quantité de 5 à 10% en poids par rapport au poids total de la matière sèche du mélange, en particulier en une quantité d'environ 7,5%. Le ratio sojalcolza peut varier dans une large mesure entre 100/0 et 0/100. De préférence, il peut être compris entre 50/50 et 90/10 et en particulier il peut être d'environ 70/30.

Les compléments azotés peuvent être présents en une quantité de 0,5 à 5% en poids par rapport au poids total de la matière sèche du mélange, de préférence en une quantité de 1 à 5% en poids par rapport au poids total de la matière sèche du mélange, en particulier en une quantité d'environ 2,8%.

Les mélasses peuvent être présentes en une quantité de 1 à 10% en poids par rapport au poids total de la matière sèche du mélange, de préférence en une quantité de 1 à 5% en poids par rapport au poids total de la matière sèche du mélange, en particulier en une quantité d'environ 2,5%.

La luzerne peut être présente en une quantité de 1 à 10% en poids par rapport au poids total de la matière sèche du mélange, de préférence en une quantité de 1 à 5% en poids par rapport au poids total de la matière sèche du mélange, en particulier en une quantité d'environ 2,5%.

La luzerne (aussi dénommée alfalfa) peut être présente sous toute forme adaptée à l'alimentation animale, en particulier sous la forme de granulés ou de bouchons de luzerne.

Les quantités de chacun des constituants du mélange peuvent être adaptées par l'homme de l'art. Bien entendu, la somme des pourcentages des constituants dans le mélange ne peut excéder 100%.

### Ensilage

L'ensilage est une technique bien connue dans le domaine du stockage des fourrages, et l'homme du métier est à même d'adapter les conditions d'ensilage du mélange selon l'invention pour obtenir les effets recherchés, en fonction des composants du mélange, de leur température et/ou de leur taux de matière sèche, et des conditions de stockage notamment.

Dans un mode de réalisation, l'ensilage a une durée comprise entre 1 semaine et une année. Dans un mode de réalisation, l'ensilage a une durée d'au moins 2 semaines, de préférence au moins 3 semaines. Dans un mode de réalisation, la durée de l'ensilage est comprise entre 2 semaines et 6 mois. Dans un mode de réalisation, la durée de l'ensilage est comprise entre 3 semaines et 2 mois. En particulier, la durée de l'ensilage est d'environ 3 semaines.

Dans un mode de réalisation, les ingrédients du mélange à ensiler ont une température avant ensilage comprise entre 15°C et 50°C, de préférence entre 20°C et 40°C.

Dans un mode de réalisation, le taux d'humidité du mélange à ensiler est compris entre 40 et 80%, de préférence entre 55 et 65% en poids par rapport au poids total du mélange, ce qui équivaut à une matière sèche de 20 à 60%, de préférence de 35 à 45%, en poids par rapport au poids total du mélange ensilé. Une telle proportion de matière sèche permet une bonne conservation du mélange sur toute la durée de l'ensilage, notamment jusqu'à une année.

De préférence, l'ensilage selon l'invention entraîne une transformation de tout ou partie des glucides présents avant ensilage dans le mélange à ensiler en produits de fermentation tels que de l'acide lactique, des acides gras ou des alcools notamment.

De préférence, l'ensilage selon l'invention entraîne une dégradation d'une partie des protéines présentes dans le mélange avant ensilage en azote non protéique, par exemple sous forme d'azote soluble ou d'azote ammoniacal.

Dans un mode de réalisation, les conditions de l'ensilage du mélange permettent d'obtenir une faible réduction de la teneur en protéines totales, et une augmentation de la teneur en fibres dans la composition alimentaire ensilée.

### Composition alimentaire finale

La présente invention concerne également une composition alimentaire, dite composition alimentaire finale, comprenant une composition alimentaire ensilée selon l'invention et éventuellement au moins un complément. Le au moins un complément est un complément adapté à l'alimentation animale, notamment à l'alimentation de ruminants tels que des ruminants laitiers.

Dans un mode de réalisation, le au moins un complément comprend de la paille hachée et/ou un complément nutritionnel.

La paille hachée peut être présente en une quantité de 1 à 25% en poids par rapport au poids total de la matière sèche de la composition alimentaire finale, de préférence en une quantité de 5 à 10% en poids par rapport au poids total de la matière sèche de la composition alimentaire finale, en particulier en une quantité d'environ 7,4%. La paille hachée permet notamment un apport fibreux dans la composition alimentaire finale.

Le complément nutritionnel peut être présent en une quantité de 1 à 10% en poids par rapport au poids total de la matière sèche de la composition alimentaire finale, de préférence en une quantité de 1 à 3% en poids par rapport au poids total de la matière sèche de la composition alimentaire finale, en particulier en une quantité d'environ 2,5%.

La composition alimentaire ensilée peut être présente en une quantité de 50 à 100% en poids par rapport au poids total de la matière sèche de la composition alimentaire finale, de préférence en une quantité de 75 à 98% en poids par rapport au poids total de la matière sèche de la composition alimentaire finale, en particulier en une quantité de 90 à 95% en poids par rapport au poids total de la matière sèche de la composition alimentaire finale.

### Méthode pour réduire la production de méthane

La présente invention concerne enfin une méthode pour réduire la production de méthane par des ruminants, notamment des ruminants laitiers, comprenant l'alimentation des ruminants, notamment des ruminants laitiers, avec une composition alimentaire ensilée ou une composition alimentaire finale selon l'invention, de préférence avec une composition alimentaire finale selon l'invention.

Dans le cas où les ruminants sont des ruminants laitiers, la méthode selon l'invention permet de préférence de réduire la production de méthane sans réduire, notamment sans modifier, la production laitière desdits ruminants laitiers. Dans certains modes de réalisation, la méthode selon l'invention peut permettre de réduire la production de méthane en augmentant la production laitière desdits ruminants laitiers.

Dans un mode de réalisation, la méthode selon l'invention comprend les étapes suivantes :
a1) fourniture d'une composition alimentaire finale selon l'invention ; puis
d) alimentation des ruminants, notamment des ruminants laitiers, avec la composition alimentaire finale fournie à l'étape a1).

Dans un mode de réalisation, la méthode selon l'invention comprend les étapes suivantes :
a2) fourniture d'une composition alimentaire ensilée selon l'invention ; puis
c) ajout de compléments à ladite composition alimentaire ensilée pour obtenir une composition alimentaire finale ; puis
d) alimentation des ruminants, notamment des ruminants laitiers, avec la composition alimentaire finale obtenue à l'étape a2).

Dans un mode de réalisation, la méthode selon l'invention comprend les étapes suivantes :
a3) préparation d'un mélange, dit mélange à ensiler, tel que défini dans la présente invention, puis
b) ensilage du mélange obtenu à l'étape a3) pour obtenir une composition alimentaire ensilée ; puis
c) ajout éventuel de compléments à la composition alimentaire ensilée obtenue à l'étape b) pour obtenir une composition alimentaire finale ; puis
d) alimentation des ruminants, notamment des ruminants laitiers, avec la composition alimentaire finale obtenue à l'étape c).

Dans un mode de réalisation, la méthode selon l'invention comprend les étapes suivantes :
a) préparation d'un mélange, ledit mélange comprenant :
   - des pulpes de betteraves ;
   - du gluten feed de blé ;
   - de l'ensilage de maïs ;
   - des drêches ; et
   - de l'enrubannage d'herbe, puis
b) ensilage du mélange obtenu à l'étape a) pour obtenir une composition alimentaire ensilée, puis
c) ajout éventuel de compléments à la composition alimentaire ensilée obtenue à l'étape b) pour obtenir une composition alimentaire finale ; puis
d) alimentation des ruminants, notamment des ruminants laitiers, avec la composition alimentaire finale obtenue à l'étape c).

L'étape a) de préparation du mélange peut être mise en oeuvre par toute technique adaptée connue dans l'art. Elle peut notamment être mise en oeuvre dans un bol mélangeur.

L'étape a) de préparation du mélange peut comprendre une étape aa) de prémélange du gluten feed de blé avec tout ou partie des constituants secs du mélange, puis une étape ab) du prémélange obtenu avec le reste des constituants. L'obtention de ce prémélange permet de faciliter la dispersion des constituants secs du mélange.

La méthode selon l'invention peut comprendre en outre, entre l'étape a) de mélange et l'étape b) d'ensilage, une étape a') de tassage du mélange obtenu. Dans le cas où l'étape a) est mise en oeuvre par des mélanges successifs des ingrédients, notamment lorsqu'elle est mise en oeuvre en plusieurs bols successifs, l'étape a') de tassage peut être mise en oeuvre après chaque mélange. L'étape b) d'ensilage peut être mise en oeuvre par toute technique d'ensilage adaptée connue dans l'art. Elle peut être mise en oeuvre dans un silo. Alternativement, elle peut être mise en oeuvre par ensilage sous emballage étanche, tel que l'ensilage en boudins ou l'enrubannage des balles. La durée de l'étape b) d'ensilage peut varier dans une large mesure.

L'étape c) d'ajout de compléments peut être mise en oeuvre par toute technique adaptée connue dans l'art. L'étape c) est de préférence mise en oeuvre juste avant l'étape d) d'alimentation des ruminants, de préférence moins d'une journée avant l'étape d).

Il peut s'écouler une durée relativement importante entre la fin de l'étape b) d'ensilage et la mise en oeuvre de l'étape c) ou de l'étape d). Ainsi, la composition alimentaire ensilée obtenue à l'étape b) peut être conservée pendant plusieurs semaines avant son utilisation dans l'étape d) d'alimentation des ruminants ou avant la mise en oeuvre des étapes c) et d).

La méthode selon l'invention, de par son utilisation d'une étape d'ensilage du mélange, et les compositions alimentaires selon l'invention, contribuent à résoudre les problématiques de sécheresse du fourrage, en particulier en été, et de temps de travail, en particulier en hiver.

La présente invention concerne également l'utilisation d'une composition alimentaire dont au moins 90% en poids en masse sèche a été ensilée pour réduire l'émission de méthane chez des ruminants.

### EXEMPLES

La présente invention se comprendra mieux à la lecture des exemples suivants qui illustrent non-limitativement l'invention.

### Exemple 1 : Préparation et stockage du mélange à ensiler

53,5T de mélange à ensiler ont été réalisées en six (6) fois dans un bol mélangeur de 15m³. Les ingrédients ont été incorporés dans l'ordre présenté dans le tableau 1 :

**[Table 1]**

| **Ingrédients** | **Quantités totales** | **Quantités par bol** |
|---|---|---|
| Enrubannage d'herbe | 6T | 0,990T |
| Ensilage de maïs | 25T | 4,125T |
| Drêches d'éthanolerie | 2,5T | 0,412T |
| Gluten feed de blé (Amyplus^{®}) | 2,5T | 0,412T |
| Tourteau soja/colza (70/30) | 2T | 0,329T |
| Pulpes de betterave surpressées | 15T | 2,475T |
| Complément azoté Damiliq^{®} énergie (aliment liquide) | 1T | 0,165T |
| **Total** | **54T** | **53,448T** |

L'ensilage de maïs et les balles d'enrubannage d'herbe ont été, au préalable, débarrassés des zones altérées.

Le mélange obtenu a été, après chaque bol, déchargé à terre dans le silo consacré (le silo avait été préalablement nettoyé et bâché). Le mélange a ensuite été tassé à l'aide d'un tracteur équipé d'une masse. Le silo a été réalisé en demi-pente sur un côté des stomos afin d'avoir un front d'attaque limité. Le silo a ensuite été bâché avec deux bâches immédiatement après le tassage du mélange sorti du 6^{ème} bol.

### Exemple 2 : Effet de l'ensilage sur la composition du mélange

### Matériel et méthodes

Les fractions azotées et le profil fermentaire du mélange avant ensilage et de la composition alimentaire ensilée ont été déterminés et sont présentés dans le tableau 2 ci-dessous.

**[Table 2]**

| Paramètre | Unité | Mélange à ensiler | Composition alimentaire ensilée |
|---|---|---|---|
| Total matières azotées | g/kg MS | 176 | 173 |
| - N-NH3 | g/kg MS | 0,52 | 0,96 |
| - N-NH3 | % N total | 1,5 | 2,9 |
| - N soluble | % N total | 25,4 | 35,6 |
| pH | | 4,1 | 4,1 |
| Acide lactique | g/kg MS | 35,16 | 58,36 |
| Total AGV | g/kg MS | 7,86 | 9,15 |
| - acétate | g/kg MS | 7 ;53 | 8,73 |
| - butyrate | g/kg MS | 0,21 | 0,23 |
| - propionate | g/lg MS | 0,13 | 0,20 |
| Total alcools | g/kg MS | 7,58 | 24,59 |
| - éthanol | g/kg MS | 7,32 | 24,28 |
| - méthanol | g/kg MS | 0,26 | 0,31 |

### Résultats

Les fractions azotées et les profils fermentaires du mélange avant ensilage et de la composition alimentaire ensilée démontrent un profil d'ensilage de qualité. La comparaison du profil fermentaire avant et après fermentation met principalement en évidence un doublement de la concentration en azote ammoniacal, une augmentation importante de la fraction soluble de l'azote (37% versus 25%) et une augmentation de la teneur en acide lactique (+66%) et en éthanol (+330%).

### Exemple 3 : Effet de l'utilisation de la composition alimentaire ensilée sur les émissions de méthane

### Matériel et méthodes

L'effet de l'alimentation de vaches laitières avec une composition alimentaire finale selon l'invention par rapport à une composition témoin a été étudié. La composition du mélange à ensiler utilisé pour obtenir la composition alimentaire ensilée incluse dans la composition alimentaire finale est détaillée dans le tableau 3 ci-dessous.

**[Table 3]**

| Aliment | Quantité brute par bol (kg) | Teneur en matière sèche (%) | Quantité en sec par bol (kg) | Composition du silo (% matière sèche) |
|---|---|---|---|---|
| Enrubannage d'herbe | 990 | 44,0 | 435,5 | 12,7% |
| Ensilage de maïs | 4125 | 30,8 | 1268,4 | 36,9% |
| Pulpes de betteraves | 2475 | 22,8 | 564,2 | 16,4% |
| Drêches de brasserie | 412 | 95,6 | 393,9 | 11,5% |
| Amyplus^{®} | 412 | 93,2 | 384,1 | 11,2% |
| Tourteau soja/colza | 329 | 88,7 | 291,7 | 8,5% |
| Damiliq^{®} 42 | 165 | 58,2 | 96,0 | 2,8% |
| Total (mélange) | | | | 100% |

De la paille hachée et un complément nutritionnel ont été ajoutés quotidiennement avant distribution à la composition alimentaire ensilée pour former la composition alimentaire finale C. Le complément nutritionnel comprend du carbonate de calcium, du phosphate monocalcique, du phosphate de magnésium, de la mélasse de canne, de l'oxyde de magnésium, des vitamines (A, D3, E) et des oligo-éléments (cuivre, manganèse, zinc, iode, cobalt, sélénium). Il dose 26% de Ca, 5,5% de P, 4% de Mg et 0,1% de Na.

La composition alimentaire finale C comprend :
- 91,1% de la composition alimentaire ensilée obtenue après ensilage du mélange présenté dans le tableau 3,
- 7,6% de paille hachée, et
- 1,3% de complément nutritionnel « Kéomine »,
les pourcentages étant exprimés en poids de matière sèche par rapport à la matière sèche totale de la composition alimentaire finale.

La composition témoin T comprend les mêmes composants que ceux du mélange listés dans le tableau 3, dans les mêmes proportions en matière sèche, les composants étant stockés séparément et mélangés dans la machine distributrice le jour même de la distribution. La composition témoin comprend également de la paille hachée et du complément nutritionnel dans les mêmes proportions en matière sèche que celles de la composition alimentaire finale C selon l'invention.

La composition témoin T comprend :
- 7,6% de paille hachée,
- 1,3% de complément nutritionnel « Kéomine »,
- 33,7% d'ensilage de maïs,
- 11,6% d'enrubannage d'herbe,
- 15% de pulpes de betteraves ensilées,
- 10,5% de drêches de brasserie,
- 10,2% de gluten feed de blé Amyplus^{®},
- 7,7% de tourteau sojalcolza, et
- 2,6% d'aliment liquide Amiliq^{®} 42,
les pourcentages étant exprimés en poids de matière sèche par rapport à la matière sèche totale de la composition témoin.

La composition alimentaire finale (11 vaches) et la composition témoin (11 vaches) ont été distribuées avec un calan deux fois par jour, vers 8h30 et 17h, à 22 vaches laitières de race PrimHolstein en lactation dont 14 multipares et 8 primipares, avec une moyenne de 5 mois de lactation, pendant 53 jours. Un concentré, dit « concentré énergie », a été en outre distribué par un système de distribution permettant la collecte des gaz respiratoires émis par les vaches, dans des quantités variant de 0 à 1080 g par jour en un maximum de 6 visites autorisées par jour. Un tel dispositif est de type GreenFeed^{®} ; il s'agit d'un système mobile permettant de mesurer sur de courtes durées les gaz respiratoires émis par les ruminants. Il se compose d'un distributeur automatique d'aliments avec identification électronique de l'animal, dans lequel l'air (air respiratoire et air ambiant) est aspiré au niveau des naseaux et de la bouche de l'animal pendant que celui-ci consomme sa portion de fourrage. Le volume d'air aspiré est mesuré et les teneurs en méthane sont déterminées en continu. Cette méthode permet de relever la quantité de méthane émise pendant les visites au distributeur.

Les vaches ont été nourries à volonté avec une consigne de refus se situant entre 5 et 10% par jour. Le taux de refus est identique entre les deux régimes (composition alimentaire finale selon l'invention et composition témoin).

Dans ces conditions, la quantité de matière sèche ingérée à l'auge, la quantité de concentré dit « concentré énergie » ingérée et la quantité de matière sèche totale ingérée n'ont pas varié significativement entre les deux régimes.

La composition alimentaire finale ingérée par les vaches est nettement plus riche en acide lactique (+ 85%) et en alcools (+361%), et légèrement plus riche en acides gras volatils (+21%) que la composition témoin ingérée par les vaches. Néanmoins, l'ensilage du mélange n'a pas eu d'effet majeur sur les apports énergétiques totaux journaliers.

Les émissions de méthane ont été mesurées quotidiennement au GreenFeed^{®} comme détaillé ci-dessus. Celui-ci était accessible en permanence à toutes les vaches de l'expérimentation.

Les données recueillies par le GreenFeed^{®} ont été traitées pour fournir la quantité de méthane émise par vache et par jour (en g CH₄/j). Les données éliminées (2% des données reçues) l'ont été selon les critères suivants :
- Résidus des régressions CO₂=f(CH₄) ou CH₄=f(CO₂) supérieurs à 3 fois l'écart type résiduel de la régression, ou
- Production de méthane inférieure à 100 g/j ou supérieure à 1000 g/j, ou
- Nombre de visites au GreenFeed^{®} sur une semaine inférieur à 7.

### Résultats

La production de méthane (CH₄), exprimée en g/j, a été mesurée en continu, puis calculée en g CH₄/kg de lait.

En moyenne sur l'essai, les vaches ont visité le GreenFeed^{®} à la même fréquence sur les deux régimes (Témoin et Composition alimentaire finale selon l'invention), avec en moyenne un taux de visite élevé et similaire de 3,4 visites par jour (P > 0,10). La production journalière de méthane a été plus faible avec la composition alimentaire finale selon l'invention qu'avec le régime Témoin, avec une réduction de 39 g/jour, soit 7% (P < 0.04). Cette production de méthane est également plus faible avec la composition alimentaire finale selon l'invention qu'avec le régime Témoin lorsqu'elle est rapportée au kg de lait produit, avec une baisse de 1.4 g CH₄/kg de lait (-9%, P < 0.002).

Les résultats sont présentés dans le tableau 4 ci-dessous.

Au cours de cette étude, il a également été démontré que l'utilisation de la composition alimentaire ensilée selon l'invention n'a pas eu d'effet significatif sur l'ingestion totale ni sur la production laitière.

**[Table 4]**

| Variables | Unité | Témoin T | Composition C | Ecart (C -T) | Différence en % (C/T) | ETR |
|---|---|---|---|---|---|---|
| Nombre de visites | /VL/j | 3,17 | 3,53 | +0,36 | +11,4 | 0,594 |
| Méthane | g/j | 525,8 | 486,8 | -39,0 | -7,4 | 40,46 |
| Méthane/lait | g/kg lait | 14,4 | 13,0 | -1,4 | -9,3 | 0,86 |

## Revendications

1. Composition alimentaire pour ruminants laitiers comprenant une composition alimentaire ensilée obtenue par ensilage d'un mélange, dit mélange à ensiler, comprenant :
- des pulpes de betteraves, et
- de l'ensilage de maïs.

2. Composition alimentaire selon la revendication 1, dans laquelle les pulpes de betteraves sont présentes dans le mélange à ensiler en une quantité comprise entre 1 et 50%, de préférence entre 5 et 30%, en particulier entre 10 et 20%, les pourcentages étant exprimés en poids par rapport au poids total de la matière sèche du mélange.

3. Composition alimentaire selon la revendication 1 ou la revendication 2, dans laquelle l'ensilage de maïs est présent dans le mélange à ensiler en une quantité comprise entre 10 et 70%, de préférence entre 20 et 60%, en particulier entre 30 et 50%, les pourcentages étant exprimés en poids par rapport au poids total de la matière sèche du mélange.

4. Composition alimentaire selon l'une quelconque des revendications 1 à 3, dans laquelle, le mélange comprend en outre des éléments choisis dans le groupe constitué par les tourteaux de soja et/ou de colza, les compléments azotés, les liants tels que les mélasses, la luzerne et tout mélange d'au moins deux de ces composants.
